# EUROPEAN PATENT APPLICATION

(11) **EP 4 403 427 A1**
(43) Date of publication of application: **24.07.2024**
(21) Application number: 23866678.8
(22) Date of filing: 15.06.2023
(51) Int. Cl.: B60T 17/22, B60T 13/12, B60K 35/00

(54) **UNMANNED VEHICLE BRAKE-BY-WIRE CONTROL METHOD AND CONTROL SYSTEM**

(30) Priority: 07.03.2023 CN 202310234131
(71) Applicant: Anhui Heli Co., Ltd., Hefei, Anhui 230601 (CN); Heli Industrial Vehicles (Shanghai) Co., Ltd., Shanghai 200000 (CN)
(72) Inventor: JIN, Shizhuo, Hefei, Anhui 230601 (CN); LI, Zixian, Hefei, Anhui 230601 (CN); LI, Liming, Hefei, Anhui 230601 (CN); GAO, Xinying, Hefei, Anhui 230601 (CN); HU, Hao, Hefei, Anhui 230601 (CN)
(74) Representative: VKK Patentanwälte PartG mbB
(86) International application number: PCT/CN2023/100341
(87) International publication number: WO 2024/098747

(57) **Abstract**

The invention discloses a brake-by-wire control method for driverless vehicles comprises the following steps: step 1: collecting brake control information, obtaining initial positions of a release braking position value of the electric push rod and a maximum braking position value of the electric push rod, and recording them as d0 and d1; step 2: verifying and calibrating positions of the electric push rod when the vehicle brake is released and at maximum braking, recording a calibrated release braking position value of the electric push rod as D0, and a calibrated maximum braking position value of the electric push rod as D1; step 3: obtaining a current control signal of the vehicle, and obtaining a target value of the electric push rod for adjusting the vehicle braking; step 4: transmitting the target value of the electric push rod obtained in step 3 to a vehicle controller for controlling vehicle braking. By detecting the emergency stop switch signal and the automatic driving mode switch signal, this application can determine whether the vehicle is in a manual braking state or an automatic braking state, and perform different braking controls in different braking states. This in turn can improve braking control.

## Description

### Technical field

The invention relates to the technical field of brake control for driverless vehicles, and specifically to a brake-by-wire control method and control system for driverless vehicles.

### Background

The vehicle braking system refers to a series of specialized devices that exert a certain force on the wheels to force them to brake to a certain extent.

The existing control method of the driving brake-by-wire system for driverless vehicles has the following problems:
1. The existing brake-by-wire system realizes the braking function in automatic driving mode by pushing and pulling the brake pedal, which will cause the intelligent driving control system to be unable to determine whether it is manual braking or automatic braking;
2. The existing brake-by-wire system realizes the braking function in automatic driving mode by pushing and pulling the brake pedal. It does not detect the brake valve pressure and cannot perform closed-loop detection of the braking state when the brake-by-wire device fails.

### Disclosure

The purpose of the present invention is to provide a brake-by-wire control method and control system for driverless vehicles to solve the problems raised in the above background technology.

In order to achieve the above objects, the present invention provides the following technical solutions:
A brake-by-wire control method for driverless vehicles comprises the following steps:
step 1: collecting brake control information, obtaining initial positions of a release braking position value of the electric push rod and a maximum braking position value of the electric push rod, and recording them as d0 and d1;
step 2: verifying and calibrating positions of the electric push rod when the vehicle brake is released and at maximum braking according to brake control information obtained in step 1, and recording a calibrated release braking position value of the electric push rod as D0, and a calibrated maximum braking position value of the electric push rod as D1;
step 3: obtaining a current control signal of the vehicle, processing according to the position parameters of the electric push rod calibrated in step 2 and the current control signal obtained, and obtaining a target value of the electric push rod for adjusting the vehicle braking;
step 4: transmitting the target value of the electric push rod obtained in step 3 to a vehicle controller for controlling vehicle braking.

In a further solution of the invention, the brake control information comprises emergency stop switch signal, manual brake pedal switch signal, front and rear axle pressure sensor signal, automatic driving mode signal, automatic driving brake signal, automatic driving brake command percentage, failure signal of the electric push rod, movement feedback signal of the electric push rod, actual position feedback of the electric push rod, release braking position value of the electric push rod, and maximum braking position value of the electric push rod.

In a further solution of the invention, in step 2, the method for obtaining the release braking position value of the electric push rod as D0 and the maximum braking position value of the electric push rod as D1 comprises the following steps:
step 2.1: determining whether a CAN communication between the electric push rod and the vehicle controller is successfully established, if yes, proceeding to step 2.2;
step 2.2: setting a movement command signal of the electric push rod to True, and setting an oil pump motor speed to 600 rpm, and allowing hydraulic oil to flow to the brake valve for braking assistance, wherein a target value of the electric push rod is equal to the release braking position value d0 of the electric push rod, if the movement feedback signal of the electric push rod is enabled, proceeding to step 2.3;
step 2.3: stopping movement of the electric push rod when it reaches the target value, if it is determined that there is no movement feedback signal of the electric push rod, then proceeding to step 2.4;
step 2.4: setting the movement command signal of the electric push rod to False, setting the oil pump motor speed to 0 rpm, stopping the brake assistance, and determining whether an absolute value of the difference between the actual position feedback of the electric push rod and the release braking position value d0 of the electric push rod is not greater than 2 mm, if yes, then the release braking position value D0 of the electric push rod is equal to the current actual position feedback value of the electric push rod, and proceeding to step 2.5; if not, outputting braking parameter setting fault signal, and displaying the same on an instrument display;
step 2.5: setting the movement command signal of the electric push rod to True, and setting the oil pump motor speed to 600 rpm, and allowing hydraulic oil to flow to the brake valve for braking assistance, wherein the target value of the electric push rod is equal to the maximum braking position value d1 of the electric push rod, if the movement feedback signal of the electric push rod is enabled, proceeding to step 2.6;
step 2.6: stopping movement of the electric push rod when it reaches the target value, if it is determined that there is no movement feedback signal of the electric push rod, then proceeding to step 2.7;
step 2.7: setting the movement command signal of the electric push rod to False, setting the oil pump motor speed to 0 rpm, stopping the brake assistance, and determining whether an absolute value of the difference between the actual position feedback of the electric push rod and the maximum braking position value d1 of the electric push rod is not greater than 2 mm, if yes, then the maximum braking position value D1 of the electric push rod is equal to the current actual position feedback value of the electric push rod; if not, outputting braking parameter setting fault signal, and displaying the same on the instrument display;

In a further solution of the invention, in step 3, when the vehicle control signal is the emergency stop switch signal, the automatic driving brake signal and the automatic driving brake command percentage, the braking control in step 3 comprises the following steps:
step 3.1: setting the movement command signal of the electric push rod to True, setting the oil pump motor speed to 600 rpm, and allowing hydraulic oil to flow to the brake valve for braking assistance, wherein the target value of the electric push rod is equal to the calibrated release braking position value D0 of the electric push rod, if the movement feedback signal of the electric push rod is enabled, proceeding to step 3.2;
step 3.2: stopping movement of the electric push rod when it reaches the target value, if it is determined that there is no movement feedback signal of the electric push rod, then proceeding to step 3.3;
step 3.3: waiting and determining whether there is a rising edge signal of an emergency stop switch or an automatic driving mode signal, if there is the rising edge signal of the emergency stop switch, proceeding to step 3.4; if there is the automatic driving mode signal, proceeding to step 3.5;
step 3.4: starting emergency stop control;
step 3.5: starting automatic driving control.

In a further solution of the present invention, the emergency stop control comprises the following steps:
step 3.41: setting the movement command signal of the electric push rod to True, and setting the oil pump motor speed to 600 rpm, and allowing hydraulic oil to flow to the brake valve for braking assistance, wherein the target value of the electric push rod is equal to the maximum braking position value D1 of the electric push rod, if the movement feedback signal of the electric push rod is enabled, proceeding to step 3.42;
step 3.42: stopping movement of the electric push rod when it reaches the target value D1, if it is determined that there is no movement feedback signal of the electric push rod, then proceeding to step 3.43;
step 3.43: setting the movement command signal of the electric push rod to False, setting the oil pump motor speed to 0 rpm, stopping the brake assistance, and determining whether an absolute value of the difference between the actual position feedback of the electric push rod and the maximum braking position value D1 of the electric push rod is not greater than 2 mm, if yes, then proceeding to step 3.44; if not, outputting a braking fault signal;
step 3.44: determining whether the brake pressure meets a braking strength value through front and rear axle pressure sensor signals, if yes, proceeding to step 3.1 after 2 seconds; if not, outputting a brake fault signal.

In a further solution of the present invention, the automatic driving control comprises the following steps:
step 3.51: determining whether there is an automatic driving brake signal, and if yes, proceeding to step 3.52;
step 3.52: setting the movement command signal of the electric push rod to True, and setting the oil pump motor speed to 600 rpm, and allowing hydraulic oil to flow to the brake valve for brake assistance, wherein the target value of the electric push rod is equal to L, L = *θ* × (*D*1 - *D*0) ÷ 100 + *D*0; if the movement command signal of the electric push rod is False , the target value of the electric push rod is equal to D0, and determining in real time whether the braking pressure meets the braking strength value through the front and rear axle pressure sensor signals; if it is detected that it does not meet the braking strength value, outputting a braking fault signal;
during the control process, if there is a rising edge signal of the emergency stop switch, proceeding to step 3.41; if there is no automatic driving brake signal or there is a manual brake pedal switch signal, proceeding to step 3.1.

In a further solution of the present invention, according to the target value of the electric push rod in step 3, the vehicle controller sends the movement command signal of the electric push rod and a speed control signal of the oil pump motor, and establishes a CAN transmission channel to send the movement command signal of the electric push rod , the target value of the electric push rod and the speed control signal of the oil pump motor to the bus in real time, wherein the electric push rod and the oil pump motor obtain the movement command signal of the electric push rod and the speed control signal of the oil pump motor through the CAN bus, and control the actions of the electric push rod and oil pump motor.

A brake-by-wire control system for driverless vehicles comprises a braking system, wherein the braking system comprises an oil pump, a brake valve, and a wheel brake in sequence, wherein the brake valve is connected to the electric push rod, the oil pump is connected to the oil pump motor, and the oil pump motor is connected to an oil pump motor controller, wherein the electric push rod and the oil pump motor controller are both connected to a vehicle controller, and the vehicle controller is connected to a signal acquisition part.

In a further solution of the present invention, the signal acquisition part comprises a rear axle pressure sensor, a front axle pressure sensor, a foot brake pedal switch, and an emergency stop switch, wherein the wheel brakes comprise a front wheel brake group and a rear wheel brake group, wherein the front axle pressure sensor is connected to a brake pipeline of the front wheel brake group, and the rear axle pressure sensor is connected to a brake pipeline of the rear wheel brake group.

In a further solution of the present invention, the vehicle controller is connected to the electric push rod and the oil pump motor controller through the CAN bus to transmit signals, and the vehicle controller is connected to an instrument display through the CAN bus.

Compared with the prior art, the beneficial effects of the present invention are:
1. By detecting the emergency stop switch signal and the automatic driving mode switch signal, this application can determine whether the vehicle is in a manual braking state or an automatic braking state, and perform different braking controls in different braking states. This in turn can improve braking control.
2. This application adopts a human-machine co-driving brake-by-wire control method to realize a closed-loop detection of the braking state when the brake-by-wire device fails. This avoids damage to the friction plates due to brake failure resulting in the entire vehicle being driven with brakes, or avoids a series of safety issues caused by brake failure without feedback.

### Brief Description of the Drawings

Fig. 1 shows a driving brake-by-wire system of a driverless vehicle;
Fig. 2 is a control flow chart of the driving brake-by-wire system of a driverless vehicle.

### Detailed Description

The technical solutions in the embodiments of the present invention will be clearly and completely described below with reference to the accompanying drawings in the embodiments of the present invention. Obviously, the described embodiments are only some of the embodiments of the present invention, rather than all the embodiments. Based on the embodiments of the present invention, all other embodiments obtained by those of ordinary skill in the art without creative efforts fall within the scope of protection of the present invention.

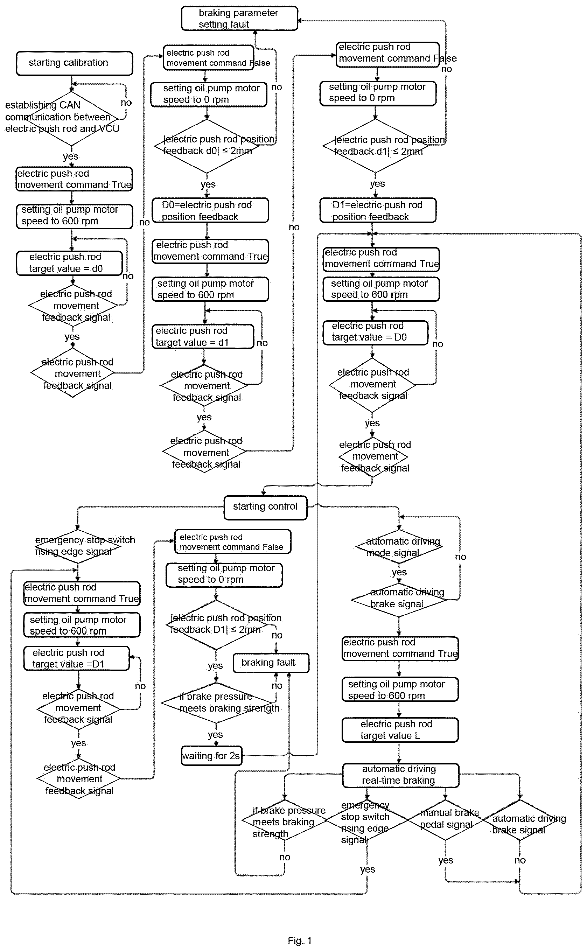

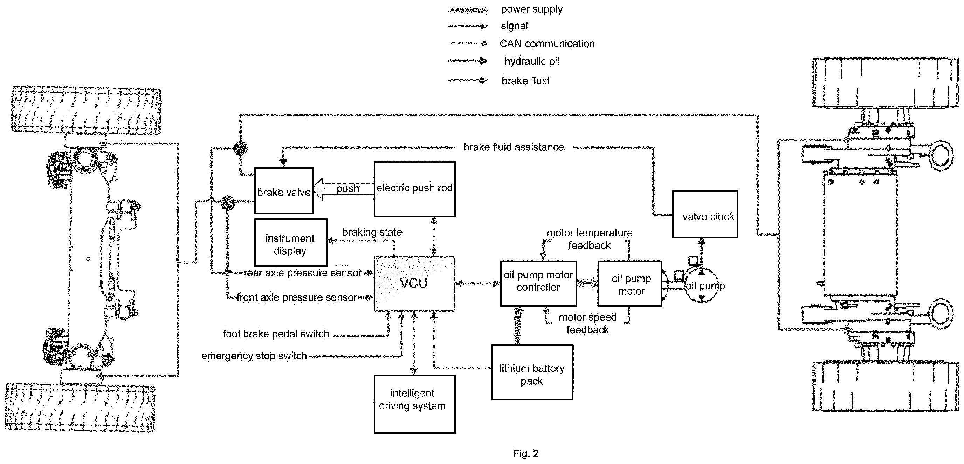

Referring to Figs. 1-2, in an embodiment of the present invention, a brake-by-wire control system for driverless vehicles comprises a braking system, wherein the braking system comprises an oil pump, a brake valve, and a wheel brake in sequence, wherein the brake valve is connected to the electric push rod, the oil pump is connected to the oil pump motor, and the oil pump motor is connected to an oil pump motor controller, wherein the electric push rod and the oil pump motor controller are both connected to a vehicle controller, and the vehicle controller is connected to a signal acquisition part. In a further solution of the present invention, the signal acquisition part comprises a rear axle pressure sensor, a front axle pressure sensor, a foot brake pedal switch, and an emergency stop switch, wherein the wheel brakes comprise a front wheel brake group and a rear wheel brake group, wherein the front axle pressure sensor is connected to a brake pipeline of the front wheel brake group, and the rear axle pressure sensor is connected to a brake pipeline of the rear wheel brake group. The vehicle controller is connected to the electric push rod and the oil pump motor controller through the CAN bus to transmit signals, and the vehicle controller is connected to an instrument display through the CAN bus. In addition, the vehicle controller is also connected to a lithium battery pack, which is connected to a pump motor control cabinet to provide power to the pump motor.

A brake-by-wire control method for driverless vehicles comprises the following steps:
step 1: collecting brake control information, obtaining initial positions of a release braking position value of the electric push rod and a maximum braking position value of the electric push rod, and recording them as d0 and d1, wherein the brake control information comprises emergency stop switch signal, manual brake pedal switch signal, front and rear axle pressure sensor signal, automatic driving mode signal, automatic driving brake signal, automatic driving brake command percentage, failure signal of the electric push rod, movement feedback signal of the electric push rod, actual position feedback of the electric push rod, release braking position value of the electric push rod, and maximum braking position value of the electric push rod;
step 2: verifying and calibrating positions of the electric push rod when the vehicle brake is released and at maximum braking according to brake control information obtained in step 1, and recording a calibrated release braking position value of the electric push rod as D0, and a calibrated maximum braking position value of the electric push rod as D1; in step 2, the method for obtaining the release braking position value of the electric push rod as D0 and the maximum braking position value of the electric push rod as D1 comprises the following steps:
   step 2.1: determining whether a CAN communication between the electric push rod and the vehicle controller is successfully established, if yes, proceeding to step 2.2;
   step 2.2: setting a movement command signal of the electric push rod to True, and setting an oil pump motor speed to 600 rpm, and allowing hydraulic oil to flow to the brake valve for braking assistance, wherein a target value of the electric push rod is equal to the release braking position value d0 of the electric push rod, if the movement feedback signal of the electric push rod is enabled, proceeding to step 2.3;
   step 2.3: stopping movement of the electric push rod when it reaches the target value, if it is determined that there is no movement feedback signal of the electric push rod, then proceeding to step 2.4;
   step 2.4: setting the movement command signal of the electric push rod to False, setting the oil pump motor speed to 0 rpm, stopping the brake assistance, and determining whether an absolute value of the difference between the actual position feedback of the electric push rod and the release braking position value d0 of the electric push rod is not greater than 2 mm, if yes, then the release braking position value D0 of the electric push rod is equal to the current actual position feedback value of the electric push rod, and proceeding to step 2.5; if not, outputting braking parameter setting fault signal, and displaying the same on an instrument display;
   step 2.5: setting the movement command signal of the electric push rod to True, and setting the oil pump motor speed to 600 rpm, and allowing hydraulic oil to flow to the brake valve for braking assistance, wherein the target value of the electric push rod is equal to the maximum braking position value d1 of the electric push rod, if the movement feedback signal of the electric push rod is enabled, proceeding to step 2.6;
   step 2.6: stopping movement of the electric push rod when it reaches the target value, if it is determined that there is no movement feedback signal of the electric push rod, then proceeding to step 2.7;
   step 2.7: setting the movement command signal of the electric push rod to False, setting the oil pump motor speed to 0 rpm, stopping the brake assistance, and determining whether an absolute value of the difference between the actual position feedback of the electric push rod and the maximum braking position value d1 of the electric push rod is not greater than 2 mm, if yes, then the maximum braking position value D1 of the electric push rod is equal to the current actual position feedback value of the electric push rod; if not, outputting braking parameter setting fault signal, and displaying the same on the instrument display;
step 3: obtaining a current control signal of the vehicle, processing according to the position parameters of the electric push rod calibrated in step 2 and the current control signal obtained, and obtaining a target value of the electric push rod for adjusting the vehicle braking; in step 3, when the vehicle control signal is the emergency stop switch signal, the automatic driving brake signal and the automatic driving brake command percentage, the braking control in step 3 comprises the following steps:
   step 3.1: setting the movement command signal of the electric push rod to True, setting the oil pump motor speed to 600 rpm, and allowing hydraulic oil to flow to the brake valve for braking assistance, wherein the target value of the electric push rod is equal to the calibrated release braking position value D0 of the electric push rod, if the movement feedback signal of the electric push rod is enabled, proceeding to step 3.2;
   step 3.2: stopping movement of the electric push rod when it reaches the target value, if it is determined that there is no movement feedback signal of the electric push rod, then proceeding to step 3.3;
   step 3.3: waiting and determining whether there is a rising edge signal of an emergency stop switch or an automatic driving mode signal, if there is the rising edge signal of the emergency stop switch, proceeding to step 3.4; if there is the automatic driving mode signal, proceeding to step 3.5;
   step 3.4: starting emergency stop control, which comprises the following steps:
      step 3.41: setting the movement command signal of the electric push rod to True, and setting the oil pump motor speed to 600 rpm, and allowing hydraulic oil to flow to the brake valve for braking assistance, wherein the target value of the electric push rod is equal to the maximum braking position value D1 of the electric push rod, if the movement feedback signal of the electric push rod is enabled, proceeding to step 3.42;
      step 3.42: stopping movement of the electric push rod when it reaches the target value D1, if it is determined that there is no movement feedback signal of the electric push rod, then proceeding to step 3.43;
      step 3.43: setting the movement command signal of the electric push rod to False, setting the oil pump motor speed to 0 rpm, stopping the brake assistance, and determining whether an absolute value of the difference between the actual position feedback of the electric push rod and the maximum braking position value D1 of the electric push rod is not greater than 2 mm, if yes, then proceeding to step 3.44; if not, outputting a braking fault signal;
      step 3.44: determining whether the brake pressure meets a braking strength value through front and rear axle pressure sensor signals, if yes, proceeding to step 3.1 after 2 seconds; if not, outputting a brake fault signal;
   step 3.5: starting automatic driving control, which comprises the following steps:
      step 3.51: determining whether there is an automatic driving brake signal, and if yes, proceeding to step 3.52;
      step 3.52: setting the movement command signal of the electric push rod to True, and setting the oil pump motor speed to 600 rpm, and allowing hydraulic oil to flow to the brake valve for brake assistance, wherein the target value of the electric push rod is equal to L, L = *θ* × (*D*1 - *D*0) ÷ 100 + *D*0; if the movement command signal of the electric push rod is False , the target value of the electric push rod is equal to D0, and determining in real time whether the braking pressure meets the braking strength value through the front and rear axle pressure sensor signals; if it is detected that it does not meet the braking strength value, outputting a braking fault signal;
      during the control process, if there is a rising edge signal of the emergency stop switch, proceeding to step 3.41; if there is no automatic driving brake signal or there is a manual brake pedal switch signal, proceeding to step 3.1.
step 4: transmitting the target value of the electric push rod obtained in step 3 to a vehicle controller for controlling vehicle braking, that is, according to the target value of the electric push rod in step 3, the vehicle controller sends the movement command signal of the electric push rod and a speed control signal of the oil pump motor, and establishes a CAN transmission channel to send the movement command signal of the electric push rod , the target value of the electric push rod and the speed control signal of the oil pump motor to the bus in real time, wherein the electric push rod and the oil pump motor obtain the movement command signal of the electric push rod and the speed control signal of the oil pump motor through the CAN bus, and control the actions of the electric push rod and oil pump motor.

It is obvious to those skilled in the art that the present invention is not limited to the details of the above-described exemplary embodiments, and the present invention can be implemented in other specific embodiments without departing from the spirit or essential characteristics of the present invention. Therefore, the embodiments should be considered illustrative and not restrictive in any respect. The scope of the invention is defined by the appended claims rather than the above description. It is therefore intended that all changes that come within the meaning and range of equivalents of the claims are embraced within the present invention. Any reference signs in the claims shall not be construed as limiting the claim in question.

In addition, it should be understood that although this specification is described in terms of embodiments, not each embodiment only comprises an independent technical solution. The description is presented in this manner for clarity only and those skilled in the art should consider the description as a whole. The technical solutions in each embodiment can also be appropriately combined to form other embodiments that can be understood by those skilled in the art.

## Claims

1. A brake-by-wire control method for driverless vehicles, **characterized by** comprising the following steps:
step 1: collecting brake control information, obtaining initial positions of a release braking position value of the electric push rod and a maximum braking position value of the electric push rod, and recording them as d0 and d1;
step 2: verifying and calibrating positions of the electric push rod when the vehicle brake is released and at maximum braking according to brake control information obtained in step 1, and recording a calibrated release braking position value of the electric push rod as D0, and a calibrated maximum braking position value of the electric push rod as D1;
step 3: obtaining a current control signal of the vehicle, processing according to the position parameters of the electric push rod calibrated in step 2 and the current control signal obtained, and obtaining a target value of the electric push rod for adjusting the vehicle braking;
step 4: transmitting the target value of the electric push rod obtained in step 3 to a vehicle controller for controlling vehicle braking.

2. The brake-by-wire control method for driverless vehicles according to claim 1, **characterized in that** the brake control information comprises emergency stop switch signal, manual brake pedal switch signal, front and rear axle pressure sensor signal, automatic driving mode signal, automatic driving brake signal, automatic driving brake command percentage, failure signal of the electric push rod, movement feedback signal of the electric push rod, actual position feedback of the electric push rod, release braking position value of the electric push rod, and maximum braking position value of the electric push rod.

3. The brake-by-wire control method for driverless vehicles according to claim 1, **characterized in that** in step 2, the method for obtaining the release braking position value of the electric push rod as D0 and the maximum braking position value of the electric push rod as D1 comprises the following steps:
step 2.1: determining whether a CAN communication between the electric push rod and the vehicle controller is successfully established, if yes, proceeding to step 2.2;
step 2.2: setting a movement command signal of the electric push rod to True, and setting an oil pump motor speed to 600 rpm, and allowing hydraulic oil to flow to the brake valve for braking assistance, wherein a target value of the electric push rod is equal to the release braking position value d0 of the electric push rod, if the movement feedback signal of the electric push rod is enabled, proceeding to step 2.3;
step 2.3: stopping movement of the electric push rod when it reaches the target value, if it is determined that there is no movement feedback signal of the electric push rod, then proceeding to step 2.4;
step 2.4: setting the movement command signal of the electric push rod to False, setting the oil pump motor speed to 0 rpm, stopping the brake assistance, and determining whether an absolute value of the difference between the actual position feedback of the electric push rod and the release braking position value d0 of the electric push rod is not greater than 2 mm, if yes, then the release braking position value D0 of the electric push rod is equal to the current actual position feedback value of the electric push rod, and proceeding to step 2.5; if not, outputting braking parameter setting fault signal, and displaying the same on an instrument display;
step 2.5: setting the movement command signal of the electric push rod to True, and setting the oil pump motor speed to 600 rpm, and allowing hydraulic oil to flow to the brake valve for braking assistance, wherein the target value of the electric push rod is equal to the maximum braking position value d1 of the electric push rod, if the movement feedback signal of the electric push rod is enabled, proceeding to step 2.6;
step 2.6: stopping movement of the electric push rod when it reaches the target value, if it is determined that there is no movement feedback signal of the electric push rod, then proceeding to step 2.7;
step 2.7: setting the movement command signal of the electric push rod to False, setting the oil pump motor speed to 0 rpm, stopping the brake assistance, and determining whether an absolute value of the difference between the actual position feedback of the electric push rod and the maximum braking position value d1 of the electric push rod is not greater than 2 mm, if yes, then the maximum braking position value D1 of the electric push rod is equal to the current actual position feedback value of the electric push rod; if not, outputting braking parameter setting fault signal, and displaying the same on the instrument display;

4. The brake-by-wire control method for driverless vehicles according to claim 1, **characterized in that** in step 3, when the vehicle control signal is the emergency stop switch signal, the automatic driving brake signal and the automatic driving brake command percentage, the braking control in step 3 comprises the following steps:
step 3.1: setting the movement command signal of the electric push rod to True, setting the oil pump motor speed to 600 rpm, and allowing hydraulic oil to flow to the brake valve for braking assistance, wherein the target value of the electric push rod is equal to the calibrated release braking position value D0 of the electric push rod, if the movement feedback signal of the electric push rod is enabled, proceeding to step 3.2;
step 3.2: stopping movement of the electric push rod when it reaches the target value, if it is determined that there is no movement feedback signal of the electric push rod, then proceeding to step 3.3;
step 3.3: waiting and determining whether there is a rising edge signal of an emergency stop switch or an automatic driving mode signal, if there is the rising edge signal of the emergency stop switch, proceeding to step 3.4; if there is the automatic driving mode signal, proceeding to step 3.5;
step 3.4: starting emergency stop control;
step 3.5: starting automatic driving control.

5. The brake-by-wire control method for driverless vehicles according to claim 4, **characterized in that** the emergency stop control comprises the following steps:
step 3.41: setting the movement command signal of the electric push rod to True, and setting the oil pump motor speed to 600 rpm, and allowing hydraulic oil to flow to the brake valve for braking assistance, wherein the target value of the electric push rod is equal to the maximum braking position value D1 of the electric push rod, if the movement feedback signal of the electric push rod is enabled, proceeding to step 3.42;
step 3.42: stopping movement of the electric push rod when it reaches the target value D1, if it is determined that there is no movement feedback signal of the electric push rod, then proceeding to step 3.43;
step 3.43: setting the movement command signal of the electric push rod to False, setting the oil pump motor speed to 0 rpm, stopping the brake assistance, and determining whether an absolute value of the difference between the actual position feedback of the electric push rod and the maximum braking position value D1 of the electric push rod is not greater than 2 mm, if yes, then proceeding to step 3.44; if not, outputting a braking fault signal;
step 3.44: determining whether the brake pressure meets a braking strength value through front and rear axle pressure sensor signals, if yes, proceeding to step 3.1 after 2 seconds; if not, outputting a brake fault signal.

6. The brake-by-wire control method for driverless vehicles according to claim 5, **characterized in that** the automatic driving control comprises the following steps:
step 3.51: determining whether there is an automatic driving brake signal, and if yes, proceeding to step 3.52;
step 3.52: setting the movement command signal of the electric push rod to True, and setting the oil pump motor speed to 600 rpm, and allowing hydraulic oil to flow to the brake valve for brake assistance, wherein the target value of the electric push rod is equal to L; if the movement command signal of the electric push rod is False , the target value of the electric push rod is equal to D0, and determining in real time whether the braking pressure meets the braking strength value through the front and rear axle pressure sensor signals; if it is detected that it does not meet the braking strength value, outputting a braking fault signal; during the control process, if there is a rising edge signal of the emergency stop switch, proceeding to step 3.41; if there is no automatic driving brake signal or there is a manual brake pedal switch signal, proceeding to step 3.1.

7. The brake-by-wire control method for driverless vehicles according to claim 1, **characterized in that** according to the target value of the electric push rod in step 3, the vehicle controller sends the movement command signal of the electric push rod and a speed control signal of the oil pump motor, and establishes a CAN transmission channel to send the movement command signal of the electric push rod , the target value of the electric push rod and the speed control signal of the oil pump motor to the bus in real time, wherein the electric push rod and the oil pump motor obtain the movement command signal of the electric push rod and the speed control signal of the oil pump motor through the CAN bus, and control the actions of the electric push rod and oil pump motor.

8. A brake-by-wire control system for driverless vehicles using the control method of any one of claims 1-7, comprising a braking system, **characterized in that** the braking system comprises an oil pump, a brake valve, and a wheel brake in sequence, wherein the brake valve is connected to the electric push rod, the oil pump is connected to the oil pump motor, and the oil pump motor is connected to an oil pump motor controller, wherein the electric push rod and the oil pump motor controller are both connected to a vehicle controller, and the vehicle controller is connected to a signal acquisition part.

9. The brake-by-wire control system for driverless vehicles according to claim 8, **characterized in that** the signal acquisition part comprises a rear axle pressure sensor, a front axle pressure sensor, a foot brake pedal switch, and an emergency stop switch, wherein the wheel brakes comprise a front wheel brake group and a rear wheel brake group, wherein the front axle pressure sensor is connected to a brake pipeline of the front wheel brake group, and the rear axle pressure sensor is connected to a brake pipeline of the rear wheel brake group.

10. The brake-by-wire control system for driverless vehicles according to claim 8, **characterized in that** the vehicle controller is connected to the electric push rod and the oil pump motor controller through the CAN bus to transmit signals, and the vehicle controller is connected to an instrument display through the CAN bus.
